# EUROPEAN PATENT APPLICATION

(11) **EP 4 752 179 A1**
(43) Date of publication of application: **03.06.2026**
(21) Application number: 25205270.9
(22) Date of filing: 29.09.2025
(51) Int. Cl.: C09D 5/24, C09D 7/62, C09D 7/65, C09D 7/40, C09D 125/10, C09D 175/04, C09D 163/00

(54) **FLEXIBLE CONDUCTIVE COATING FORMULATION FOR HEAT SHRINK TUBING APPLICATIONS**

(30) Priority: 30.09.2024 US 202418901335
(71) Applicant: TE Connectivity Solutions GmbH, 8200 Schaffhausen (CH)
(72) Inventor: MORALES, Miguel, Fremont, 94555 (US); RADZILOWSKI, Leonard Henry, Fremont, 94555 (US); WU, Yiliang, San Ramon, 94582 (US); SONEJA, Shallu, Fremont, 94555 (US)
(74) Representative: Ashton, Gareth Mark

(57) **Abstract**

A flexible conductive coating formulation for use in a heat shrink application having high conductivity (i.e., low volume resistivity) and good adhesion is described. The flexible conductive coating comprises a conductive filler, solvent, binder and optional additives. A method of forming the conductive coating is also described.

## Description

### FIELD OF THE INVENTION

The present invention is directed to a flexible conductive coating formulation having strong adhesion, high conductivity (i.e., low volume resistivity), and flexibility which can be produced at a lower cost and is environmentally friendly for use in heat shrink tubing applications. The coating comprises a binder, a solvent, a conductive filler and optional additives .

### BACKGROUND OF THE INVENTION

Heat shrink tubing (HST) is a shrinkable plastic tube often used to insulate electrical wires and other electrical components. HST provides abrasion resistance and environmental sealing protection for stranded and solid wire conductors, connections, joints, and terminals used in various electrical applications. HST can also be used to repair damaged insulation on electrical wires, bundle wires together, and to create cable entry seals. HST may be a single-walled system or a multi-walled system, wherein the multi-walled system includes at least one heat-shrinkable layer and at least one other layer. Heat shrink tubing is commonly manufactured from fluoropolymer or polyolefin which is extruded in tube form, crosslinked, and then expanded. The expanded tube then shrinks radially when heated. Examples of heat shrinkable materials can be found in U.S. Patent No. 2,027,962 and U.S. Patent No. 3,086,242. The process of shrinking an HST is referred to as "recovering" an HST and the predetermined temperature at which an HST starts to recover is referred to as its "recovery temperature". As an HST recovers, i.e., shrinks, it exerts an inward force against the items it surrounds, which is referred to as the "hoop stress" of the HST. The degree of hoop stress is determined by certain HST characteristics such as the type of base polymer, wall thickness, degree of crosslinking, and degree of expansion. Hoop stress is also affected by process parameters such as temperature of recovery and degree of recovery. Hoop stress plays a role in the use of coatings which can be used on HST as it is important to have the ability to apply the coating without recovering the HST.

As coatings are typically applied to the HST after it has been expanded, the coating is put into a state of compression in the circumferential direction when the HST is recovered to its original shape. Therefore, it is important that the coating tolerate this compressive force without delaminating from the HST surface or cracking. Ideally, flexibility, low hardness and strong adhesion are needed for the coating to perform well on HST.

Conductive coatings applied to the inner and/or outer surfaces of heat shrink tubes generally comprise metal particles dispersed in a polymer matrix. These coatings may contain flammable or otherwise hazardous solvents. Furthermore, there are commercially available conductive coatings for HST which have weak adhesion, especially after shape recovery of HST. In addition, conductive coatings may be difficult to apply to HSTs.

Conductive coatings can be applied to a substrate such as HST by many different methods. For example, a conductive coating can be applied by spray-coating. Methods of spray-coating typically include spraying a conductive coating solution onto a substrate. The conductive coating solution typically contains a mixture of a binder and conductive metal. The conductive coating should also have good adhesion characteristics to prevent peeling of the conductive coating from the substrate. Furthermore, the conductive coating should have high conductivity (i.e., low volume resistivity), as well as flexibility. To be useful in most manufacturing processes, the conductive coating should have some abrasion resistance to withstand scratching caused by back-end manufacturing steps. Finally, it is desirable to have a conductive coating that is lower in cost than conventional conductive coatings, as well as being environmentally friendly.

In a conventional spray-coating method, a conductive filler, such as a flake-like silver powder, nickel powder or aluminum powder, may be used to provide electrical conductivity within an otherwise relatively highly resistive coating composition. Unfortunately, when the coating composition is in a liquid state, the metal powder within the coating composition may settle and form a sediment within the coating composition. The formation of a sediment may cause layer separation that is difficult to correct with conventional mixing techniques, such as mechanical stirring. To inhibit sedimentation, the coating composition should have sufficient viscosity to avoid sedimentation. Organic solvents are generally used to achieve the desired viscosity. Unfortunately, many of the organic solvents used may contribute to environmental pollution and may cause health problems in persons exposed to the preparation. Furthermore, some of these solvents may be flammable and pose a substantial fire risk.

Japanese Patent Publication No. JPH10162646A described the manufacture of a conductive resin composition having good conductivity and migration resistance. The composition comprises a thermosetting resin and a conductive powder. Examples of suitable thermosetting resin include an epoxy resin, a phenol resin, a melamine resin, an alkyd resin, a polyurethane resin, a polyester resin, an acrylic resin, a polyimide resin and a combination of these resins. The conductive powder has a general formula of AgₓCu_{y} [0.001≤ x≤ 0.6, 0.4 ≤ y ≤ 0.999] and contains 30 to 95 parts by weight of a copper alloy powder having a silver concentration on the particle surface. The remainder of the 5 to 70 parts by weight of the conductive powder is chosen from silver powder, silver alloy powder and silver-plated copper powder.

EP Patent No. EP2017016B1 describes the method of producing a conductive coating film with good adhesion to a substrate and low volume resistance of about 10⁻⁶ Ohm-cm. A conductive coating film is formed on a substrate by bringing a conductive material covered with a protective material into contact with a material having anion exchange ability, through such a process wherein an anion exchange layer containing a material having anion exchange ability is formed on a substrate and then a layer containing a conductive material covered with a protective material is formed on the anion exchange layer, or alternatively through such a process wherein a layer containing a conductive material covered with a protective material is formed on a substrate and then an anion exchange layer containing a material having anion exchange ability is formed on the layer containing a conductive material. The anion exchange layer and the layer containing a conductive material may be formed by coating, printing or the like. By using this method, a conductive coating film having excellent adhesion to a substrate can be formed on a substrate at low temperature in short time.

Japanese Publication No. JP2007254635A describes an electroconductive ink composition which comprises a metal powder treated with a surfactant, a resin and a volatile solvent. The electroconductive ink composition is used in a printing method where an ink coating film image is formed on the surface of a silicone blanket and is transferred onto a substrate to be printed. The resin is chosen from epoxy resin, an amino resin and a blocked isocyanate resin. The metal powder can be silver powder or metal particles whose surface is coated with silver. The surfactant can be an anionic surfactant or a nonionic surfactant. The volatile solvent can be chosen from the group including alcohols such as methanol, ethanol, n-propanol and benzyl-alcohol. The amount of the volatile solvent used in the electroconductive ink composition varies depending upon the viscosity needed for the coating method used.

U.S. Patent No. 7,828,994B2 describes a conductive paint composition for forming conductive coatings on a substrate. The conductive paint composition includes a solvent, a metal powder, a rheology control agent and a water dispersible polyurethane resin. The metal powder used in this patent can be a silver powder or a silver coated copper powder. This conductive paint composition is sprayed on a surface of a substrate and dried on the surface at a temperature in the range of about 40° C to about 70° C.

Chinese Patent No. CN102863924B describes a method of preparing a silver-plated copper powder/epoxy resin conductive adhesive. The method comprises mixing and dispersing silver salt and accelerator, adding epoxy resin, curing agent and thinning agent, agitating, and adding silver plated copper powder.

Chinese Patent No. CN108176849B describes a silver coated copper nano powder and method of preparing such a powder. The method has the advantage of low cost and suitability of large-scale production of a conductive adhesive. This conductive adhesive can be used on various substrates to provide good conductivity and adhesion.

Kim et. al.in their paper "Improvement of the Thermal Stability of Dendritic Silver-Coated Copper Microparticles by Surface Modification Based on Molecular Self-Assembly", Nano Convergence, vol. 8, no. 15, published in 2021, discuss electrically conductive adhesives that are used in the fabrication of electronic devices and mechanical attachments. These adhesives are made from a polymer matrix and conductive metal fillers. One adhesive described is an epoxy-based adhesive containing 20 vol.% of Ag/Cu powder with a Ag content of 15%.

U.S. Patent No. 10,844,198B2 discloses an epoxy paste composition including a silver-coated copper nanowire having a core shell structure and a curing agent. The patent also discloses a conductive film made from the epoxy paste composition.

Super Shield Silver Coated Copper Epoxy Paint 843ER Liquid available from MG Chemicals is a commercially available 2-part epoxy based conductive paint with highly conductive silver coated copper flake. The cured paint is smooth and extremely hard. It is abrasion and scratch resistant. It adheres strongly to plastics, as well as metal, glass, ceramic and wood.

Cho-Shrink 1120 Conductive Heat Shrinkable Cable Shielding System, available from Parker Hannifin Corporation, Chomerics Division, is a polyolefin heat shrinkable tubing coated with a silver-plated copper filled coating system. The tubing can be subject to a shrinking process which is not to exceed 191°C in order to avoid loss of properties.

It would, therefore, be beneficial to provide a conductive coating having strong adhesion, high conductivity (i.e., low volume resistivity), low hardness and flexibility which can be manufactured at a lower cost than conventional conductive coatings for use in heat shrink tubing applications. It would also be beneficial that such a conductive coating is environmentally friendly and can be applied to the HST at a temperature below the recovery temperature of the HST. In particular, it would be beneficial to provide a flexible conductive coating formulation which comprises a binder, a solvent, a conductive filler and an optional additive such as a dispersant, especially one which can be used on either the inner or the outer surface of a heat shrink tube.

### SUMMARY OF THE INVENTION

An embodiment is directed to a flexible conductive coating composition comprising a binder, a solvent, and a conductive filler which has strong adhesion and high conductivity (i.e., low volume resistivity) for use in heat shrink tubing applications.

Another embodiment is directed to a method for forming a flexible conductive coating which can be used on various substrates for use in heat shrink tubing applications.

Other features and advantages of the present invention will be apparent from the following more detailed description of the illustrative embodiment, which illustrates, by way of example, the principles of the invention.

### DETAILED DESCRIPTION OF THE INVENTION

In the description of embodiments of the invention disclosed herein, any reference to direction or orientation is merely intended for convenience of description and is not intended in any way to limit the scope of the present invention. Relative terms such as "lower," "upper," "horizontal," "vertical," "above," "below," "up," "down," "top" and "bottom" as well as derivative thereof (e.g., "horizontally," "downwardly," "upwardly," etc.) are for convenience of description only and do not require that the apparatus be constructed or operated in a particular orientation unless explicitly indicated as such. Terms such as "attached," "affixed," "connected," "coupled," "interconnected," and similar refer to a relationship wherein structures are secured or attached to one another either directly or indirectly through intervening structures, as well as both movable or rigid attachments or relationships, unless expressly described otherwise.

Moreover, the features and benefits of the invention are illustrated by reference to the preferred embodiments. Accordingly, the invention expressly should not be limited to such embodiments illustrating some possible non-limiting combination of features that may exist alone or in other combinations of features, the scope of the invention being defined by the claims appended hereto.

The invention is directed to a flexible conductive coating having strong adhesion, high conductivity (i.e., generally a low volume resistivity of less than 1x 10⁻⁵ Ohm-m) and flexibility for use in heat shrink tubing applications. Preferably, the conductive coating is produced at a lower cost than conventional conductive coatings, is environmentally friendly and can be applied at a lower temperature than conventional conductive coatings to the heat shrink tubing. The flexible conductive coating comprises a binder, a solvent, a conductive filler and optional additives.

The binder of the conductive coating can be any polymeric binder. The binder is preferably flexible as measured by hardness and tensile elongation with a relatively low curing temperature, i.e. less than about 50°C. If the flexible conductive coating is to be applied by spraying onto a heat shrink tube, preferably, a low hardness, high elongation binder is used. Preferably, the binder has a Shore A hardness in the range of about 30 to about 80 and an elongation (%) from about 800 to 6 as measured by ASTM D638-14. An example of such a binder is an epoxy, styrene-butadiene rubber dispersion, a thermoplastic polyurethane dispersion or a blend of thermoplastic polyurethane dispersion and polyacrylate dispersion. The styrene-butadiene rubber dispersion, thermoplastic polyurethane dispersion, and blend of thermoplastic polyurethane dispersion and polyacrylate dispersion are all waterborne dispersions. In a preferred embodiment, the binder is an epoxy.

According to an aspect of the present invention, the epoxy may be any one or two or more epoxy resins selected from the group consisting of a bisphenol A type epoxy resin, a bisphenol F type epoxy resin, a bisphenol S type epoxy resin, a phenol novolac type epoxy resin, a cresol novolac type epoxy resin, an alkylphenol novolac type epoxy resin, a biphenyl type epoxy resin, a naphthalene type epoxy resin, a dicyclopentadiene type epoxy resin, triglycidyl isocyanate, a urethane-modified epoxy resin, and a non-aromatic epoxy resin, but is not limited thereto. The epoxy to be used in the instant invention preferably must be able to be sprayed onto a heat shrink tube. Examples of suitable commercially available epoxy resins include but are not limited to Duralco 4538 epoxy resin available from Cotronics Corporation and United Adhesives EP 1386, available from United Adhesives, Inc.

The epoxy resin comprises about 0.6 to about 4.5 wt. % of the flexible conductive coating, and preferably from about 1.6 to about 4.0 wt. % of the conductive coating. In the most preferred embodiment, the epoxy resin comprises about 2.6 to about 3.8 wt. % of the conductive coating.

In addition, the epoxy resin composition may include an epoxy hardener which is a curing agent. The epoxy composition according to the present invention may have a short curing time, i.e. less than 60 minutes and preferably does not require a high curing temperature, i.e. the curing temperature is less than 50°C.

According to an aspect of the present invention, the epoxy hardener may be any one or two or more selected from the group consisting of an acid anhydride-based epoxy hardener, a phenol-based epoxy hardener, an imidazole-based epoxy hardener, and an amino-based epoxy hardener, but is not limited thereto.

Examples of suitable acid anhydride-based epoxy hardeners are, any one or two or more selected from the group consisting of phthalic anhydride, maleic anhydride, trimellitic anhydride, pyromellitic anhydride, hexahydrophthalic anhydride, tetrahydrophthalic anhydride, methyl nadic anhydride, nadic anhydride, glutaric anhydride, methylhexahydrophthalic anhydride, methyltetrahydrophthalic anhydride.

Examples of phenol-based epoxy hardener are any one or two or more selected from the group consisting of phenol resins such as a formaldehyde condensed resol type phenol resin, a non-formaldehyde condensed phenol resin, a novolac-type phenol resin, a novolac-type phenol formaldehyde resin, and a polyhydroxystyrene resin; resol type phenol resins such as an aniline-modified resol resin and a melamine-modified resol resin; novolac-type phenol resins such as a phenol novolac resin, a cresol novolac resin, a tert-butylphenol novolac resin, a nonylphenol novolac resin, and a naphthol novolac resin; special phenol resins such as a dicyclopentadiene-modified phenol resin, a terpene-modified phenol resin, a triphenolmethane-type resin, and a phenol aralkyl resin and a naphthol aralkyl resin having a phenylene skeleton or a diphenylene skeleton; polyhydroxystyrene resins such as a poly(p-hydroxystyrene) resin.

The amino-based epoxy hardener may be any one or two or more selected from the group consisting of dimethyl dicykan (DMDC), dicyandiamide (DICY), isophorone diamine (IPDA), diethylenetriamine (DETA), triethylenetetramine (TETA), bis(p-aminocyclohexyl) methane (PACM), methylenedianiline (for example, 4,4'-methylenedianiline), polyetheramine, for example, polyetheramine D230, diaminodiphenylmethane (DDM), diaminodiphenylsulfone (DDS), 2,4-toluenediamine, 2,6-toluenediamine, 2,4-diamino-1-methylcyclohexane, 2,6-diamino-1-methylcyclohexane, 2,4-diamino-3,5-diethyltoluene, 2,6-diamino-3,5-diethyltoluene, 1,2-diaminobenzene, 1,3-diaminobenzene, 1,4-diaminobenzene, diamino diphenyl oxide, 3,3',5,5'-tetramethyl-4,4'-diaminobiphenyl, 3,3'-dimethyl-4,4'-diaminodiphenyl, and the like.

An example of an epoxy hardener that can be used in the invention that is commercially available is Duralco 4538 epoxy hardener, available from Cotronics Corporation. Another example of an epoxy hardener that can be used in the invention that is commercially available is United Adhesives EP 1386, available from United Adhesives, Inc.

The epoxy hardener comprises about 1.2 to about 9.0 wt. % of the flexible conductive coating. Preferably, the epoxy hardener comprises 3.3 to about 8.0 wt. % of the flexible conductive coating. Most preferably, the epoxy hardener comprises about 5.2 to about 7.6 wt. % of the flexible conductive coating.

Additional examples of suitable binders to be used in the flexible conductive coating formulation include styrene butadiene rubber dispersions and thermoplastic polyurethane dispersions.

In one embodiment, a styrene butadiene rubber (SBR) dispersion is used as the binder. The latex particles contain random copolymers of styrene and butadiene monomers. Polymerization occurs in water with emulsifiers such as fatty acids. A fraction of the styrene repeat units were carboxylated, which enhances certain mechanical properties, adhesion, and compatibility with fillers. In one embodiment, the SBR dispersion contained 20 to about 25 % bound styrene. If used for a flexible coating formulation, the SBR dispersion is in the range of about 1.6 to about 12.0 wt. % of the total formulation, preferably about 3.1 to about 9.6 wt. % of the total formulation and most preferably from about 5.4 to about 8.5 wt. % of the total formulation. An example of a commercially available styrene butadiene rubber dispersion is Lib-SBR, available from MTI Corporation, Richmond, California. Another example is Barrier Pro 4551, available from Mallard Creek Polymers Corporation.

In yet another embodiment, a thermoplastic polyurethane (TPU) dispersion is used. The TPU dispersion can include copolymers and blends of TPU dispersion that contain acrylic, polyester or polycarbonate functional groups. Alternatively, the TPU dispersion can be mixed with an acrylic dispersion. In some embodiments, the thermoplastic polyurethane dispersion can have the chemical structure of the formula set out below: 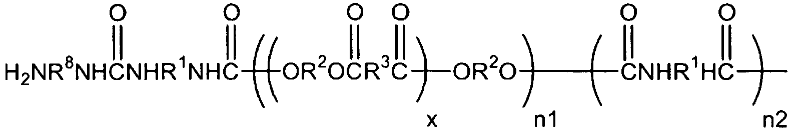 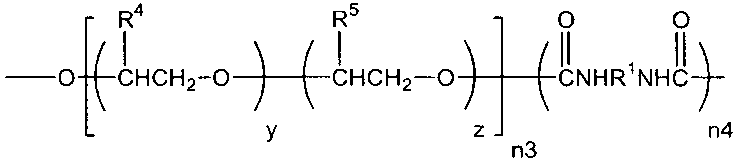 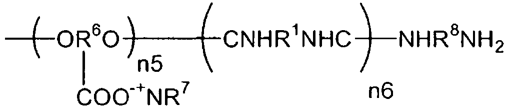 wherein: R1 represents an aliphatic hydrocarbon having from 4 to 12 carbon atoms, a cyclic aliphatic hydrocarbon having from 6 to 15 carbon atoms or a mixture thereof; R2 represents an aliphatic hydrocarbon having from 2 to 12 carbon atoms; R3 represents an aliphatic hydrocarbon having from 2 to 20 carbon atoms or an aromatic hydrocarbon having from 6 to 20 carbon atoms; R4 and R5 independently represent a hydrogen atom or a methyl group; R6 represents an aliphatic hydrocarbon having from 3 to 4 carbon atoms; R7 represents a hydrogen atom or an aliphatic hydrocarbon having from 1 to 9 carbon atoms; R8 represents an aliphatic hydrocarbon having from 1 to 10 carbon atoms, a cyclic aliphatic hydrocarbon having from 3 to 10 carbon atoms or a mixture thereof; wherein the ratio of n1:(n2+n4+n6):n3:n4 is (0.2 to 1.5):(1.0 to 3.0):(0.01 to 0.3):(0.1 to 1.0); wherein n5 is from 0.1 to 1.0; wherein x is from 1 to 20; wherein a sum of y and z is from 2 to 200; and wherein the polyurethane resin contains a repeating unit in which R3 is an aromatic hydrocarbon and a repeating unit in which R3 is an aliphatic hydrocarbon. If used in a flexible coating formulation, the TPU dispersion is in the range of about 2.5 to about 19.5 wt. % of the total formulation, preferably about 5.0 to about 17.5 wt. % of the total formulation and most preferably from about 7.0 to about 16.0 wt. % of the total formulation. An example of a commercially available thermoplastic polyurethane dispersion is Behr B8102, available from Behr Process Corporation. Other examples of commercially available thermoplastic polyurethane dispersions include Alberdingk U 4000 or Alberdingk U 4040, available from Alberdingk Bolley. Furthermore, the thermoplastic polyurethane dispersion such as Alberdingk U 4000 can be mixed with a polyacrylate dispersion, such as Alberdingk AC 2389 from Alberdingk Bolley or Rovene 6120 acrylic emulsion from Mallard Creek Polymers to form a mixture of thermoplastic polyurethane dispersion and a polyacrylate dispersion. If the mixture is used in a flexible coating formulation, the thermoplastic polyurethane dispersion is in the range of about 3.5 to about 9.5 wt. % of the total formulation and the polyacrylate dispersion is in the range of about 2.4 to about 7.0 wt. % of the total formulation, preferably the thermoplastic polyurethane dispersion is in the range of about 5.0 to about 8.5 wt. % of the total formulation and the polyacrylate dispersion is in the range of about 2.5 to about 6.2 wt. % of the total formulation and most preferably, the thermoplastic polyurethane dispersion is in the range of about 5.5 to about 7.5 wt. % of the total formulation and the polyacrylate dispersion is in the range of about 3.6 to about 5.3 wt. % of the total formulation.

The conductive filler can be any conductive filler to achieve the desired properties of a flexible conductive coating which can be used in the heat shrink tubing application. In one embodiment, the filler is silver coated copper flakes. An example of a conductive filler that can be used in the instant invention is Potters SC04F20 silver coated copper flakes, available from Potters Industries. Another example of a conductive filler is SC 2042 silver coated copper flakes, distributed by Industrial Powder, Inc.

The conductive filler comprises about 53.0 to about 65.5 wt. %. of the flexible conductive coating, and preferably from about 54.5 to about 64.5 wt. % of the flexible conductive coating in a liquid state, when it is to be used in spray coating applications. More preferably, the conductive filler comprises about 55.0 to about 63.3 wt. % of the flexible conductive coating in a liquid state when it is to be used in spray coating applications.

The dispersant used in the instant invention can be any dispersant which is compatible with the solvent and disperses the conductive filler in the conductive coating. Various kinds and types of dispersants are commercially available and any one of such commercially available dispersants can be used. Examples of the commercially available dispersants, which can be used in the present invention, include but are not limited to Solsperse 3000, Solsperse 9000, Solsperse 27000, Solsperse 28000, Solsperse 32000, Solsperse 47000, Solsperse W210, Solsperse W430, Solsperse WV400, Solsperse W150, Solsperse W100 (available from the Lubrizol Corporation), SMA1000H, SMA2000H, SMA3000, SMA1440, SMA17352, SMA2625, SMA3840 (available from Cray Valley, Company), EFKA4009, EFKA4046, EFKA4047, EFKA4080, EFKA4010, EFKA4400 (available from BASF), Ajisper PB821, Ajisper PB711, Ajisper PB822, Ajisper PN411, Ajisper PA111 (available from Ajinomoto Fine-Techno, Inc.), Disparlon KS-860, Disparlon KS-873N, Disparlon 7004, Disparlon 1831, Disparlon DN-900, Disparlon DA-1200, Disparlon AQ320, Disparlon AQD400, (available from King Industries, Inc.), Igepal CA-630 (available from Sigma-Aldrich Company), Dapro W-77 (available from Elementis, PLC), and the like. These dispersants may be used alone or in combination of two or more thereof provided that the desired properties are achieved.

The amount of optional dispersant used in the flexible conductive coating for use in a heat shrinkable tubing comprises from about 0.15 to about 1.10 wt. %, and preferably from about 0.20 to about 1.00 wt. %. More preferably, the amount of dispersant used in the flexible conductive coating comprises from about 0.25 to about 0.90 wt. %.

A solvent is used in conjunction with the binder and conductive filler as well as dispersant to obtain the conductive coating composition. The amount of solvent is adjusted throughout the process in order to optimize the process of coating the heat shrink tube using the desired application method. Examples of such solvents which can be used in the instant invention include but are not limited to: water, alcohols such as methanol, ethanol, n-propanol, butyl, and benzyl alcohol; ketones such as acetone, methyl ethyl ketone, cyclohexanone, isophorone and acetylacetone; ethers such as tetrahydrofuran, dioxane, methyl cellosolve and diglyme. Additionally the solvent can be chosen from esters such as methyl acetate, ethyl acetate and diethyl carbonate; aliphatic halogenated hydrocarbons such as methylene chloride, chloroform, carbon tetrachloride and 1,1,2-trichloroethane; benzene, toluene, o-xylene and p-xylene, aromatics such as m-xylene, monochlorobenzene and dichlorobenzene. Any of these solvents can be used alone or with compatible solvents to dilute the conductive coating composition and to obtain the desired consistency of the coating composition. A mixture of solvents can be chosen so as to help with control of the drying of the coating. Typically, the total amount of solvent is in the range of about 22.0 to about 42.1 wt. % of the flexible coating composition; preferably, from about 24.0 to about 39.0 wt. % of the composition and most preferably from about 23.8 to about 36.0 wt. % of the composition.

In one embodiment, in order to obtain an environmentally friendly composition, benzyl alcohol is used as the solvent because of its environmentally friendly nature and not being as flammable as other organic solvents. Another example of a suitable solvent which can be used in the instant invention is dihydrolevoglucosenone. In another embodiment, a mixture of water and ethanol was used as the solvent. In yet another embodiment, a mixture of benzyl alcohol and ethanol was used as the solvent.

A rheology control agent is optionally used in the flexible conductive coating formulation. Typically, the rheology control agent is an acrylic polymer that is relatively easily dissolved in alcohol-based solvents, does not significantly influence the conductivity of the resulting cured conductive coatings, inhibits metal precipitation, and improves spraying workability. An example of a commercially available rheology control agent is Carbopol EZ-2, which is available from Lubrizol Corporation, of Cleveland, Ohio. Another example of a rheology control agent is Klucel L, a hydroxypropyl cellulose, available from Ashland. Yet another example of a rheology control agent is Rheovis PU 1214, available from BASF. In the event a rheology control agent is used in the flexible conductive coating formulation, then it is used in an amount in a range from about 0.20 wt. % to about 0.75 wt. % of the total composition; preferably from 0.25 to about 0.70 wt. % of the total composition; and most preferably from about 0.30 to about 0.67 wt. % of the total composition.

The conductive coating may include also additional additives conventionally employed in the manufacture of products made from polymers. Suitable additives include pigments, dyes, voiding agents, antistatic agents, anti-foaming agents, flame retardants, plasticizers, adhesion promoters, radical scavengers, anti-blocking agents, anti-dust agents, antifouling agents, surface active agents, slip aids, optical brighteners, plasticizers, viscosity modifiers, gloss improvers, dispersion stabilizers, UV stabilizers, UV absorbers, antioxidants, lubricity agents, heat stabilizers, hydrolysis stabilizers, cross-linking activators, coupling agents, layered silicates, opacifiers, such as barium sulfate, tungsten metal, non-oxide bismuth salts, fillers, colorants, reinforcing agents, adhesion mediators, impact strength modifiers, antimicrobials, and any combination thereof. Such additives may be included in conventional amounts. These additives can be mixed into the conductive coating in any conventional manner desired, to achieve the desired properties in the conductive coating. In one embodiment, an adhesion promoter is used as an additive in the flexible conductive coating. An example of a commercially available adhesion promoter is AdvaBond 7418 available from Advanced Polymer, Inc. The adhesion promoter is preferably used in the amount of about 0.8 to about 1.2 wt. % of the total composition. Alternatively, the adhesion of the conductive coating can be improved by using a plasma treatment or a corona treatment.

For use in a heat shrink tubing application, the ratio of the conductive filler to the non-volatile organic compounds after being dried (without the solvent) is an important parameter. The conductive filler is in the range of 80 to 97 wt. %, or preferably 81-95 wt. %., or most preferably, 82-94 wt. % of the conductive filler and non-volatile organic compound after being dried (without the solvent). The amount of non-volatile organic compounds is in the range of about 3-20 wt. % , or preferably, 5-19 wt. %., or most preferably 6-18 wt. % of the conductive filler and the non-volatile organic compound after being dried (without the solvent). The non-volatile organic compounds include the resin, the optional dispersant, and the rheology control agent and optional adhesion promoter. The amount of solvent is adjusted in the flexible conductive coating formulation to make it easy to be sprayed or otherwise applied onto the surface of the heat shrink tube.

In another aspect, the invention relates to a process for preparing the flexible conductive coating for use in a heat shrink tubing application. The process comprises: mixing all the ingredients to obtain the desired composition. Examples of such suitable equipment include high speed Henschel mixers, FlackTek Speed mixers, ribbon blenders, shakers, impellors, paint shakers, drum rollers and the like. Any mixing device can be used provided it can be operated at low shear conditions to avoid heating the mixture. Preferably, a FlackTek Speed mixer is used. When mixed, the flexible conductive coating composition has a viscosity in the range of about 55 cps measured with a cone and plate viscometer at a shear rate of 250 seconds⁻¹.

In one embodiment, the dispersant and the solvent are first combined and mixed. The epoxy resin is then added to the mixture; all three ingredients are mixed. The conductive filler is added to the mixture and the mixture is further mixed. When the mixture is ready to be applied, as a coating, e.g. by spraying, the hardener is then added to the mixture comprising dispersant, solvent and epoxy resin and is further mixed.

The mixture is then loaded into a spray gun or other applicable application tool. The mixture can be used on the inner surface or the outer surface or both surfaces of the tubing as desired. This composition has a very low viscosity which allows for the use in application by a spray gun. The mixture is sprayed onto the surface of the heat shrink tube, preferably at a constant speed and flow to obtain a conductive coating having a thickness of about 1 to 50 micrometers. The flexible conductive coating preferably has good adhesion and high conductivity (i.e., low volume resistivity). Preferably, the adhesion as measured by ASTM D3359 is in the range of about 4B to about 5B. This flexible conductive coating has a volume resistivity of less than 1 x 10⁻⁵ Ohm-m as measured according to IEC 600093. In some embodiments, the volume resistivity ranges from about 1 x 10⁻⁶ to about 1 x 10⁻⁷ Ohm-m. The volume resistivity is dependent upon the desired end use application of the coating.

Although spraying is the preferred coating method, there are other suitable methods to provide the conductive coating on the heat shrink tubing. These other methods include but are not limited to screen printing, brushing, rolling, dispensing and pad printing.

After the coating, drying is carried out at drying temperature of approximately 50 to 150°C. to obtain a flexible conductive coating having high conductivity (i.e., low volume resistivity). Most preferably, the coating is dried at a temperature below recovery temperature of the HST. Although a flexible conductive coating may also be obtained by removing a solvent with drying at room temperature of 25°C. for several hours or drying under vacuum, drying at the above range of temperature is preferred to obtain sufficient conductivity yet maintaining the flexibility. As a drying method, any method including hot air drying, far infrared drying and the like may be used. For heat shrink tubing applications, the solvent in the coating composition is removed at a low temperature, preferably 50°C or below to avoid the onset of shape recovery of the HST. Thickness of the conductive coating (i.e., thickness of a conductive coating film) is not specifically limited, but it is generally within the range of 1 to 50 µm, preferably in the range of 5 to 15 µm.

The coating can then be optionally further heat treated. If subject to further heat treatment, it is preferably performed at a temperature below the recovery temperature of the HST. In one embodiment, the heat treatment occurs at about 50°C. Other temperatures can be used for further heat treatment provided so long as the coating is cured to the desired amount.

### Examples

The desired amount of dispersant and solvent were combined and placed in a capped container for 5 minutes at 50°C in order for the dispersant to dissolve in the solvent. The mixture was mixed for one minute at 1800 to 2000 rpm. An epoxy resin was added to the mixture and was mixed for 2 additional minutes at 2000 rpm. The conductive particles were added to the composition and mixed for 5 additional minutes at 2000 rpm to form the first part of the flexible conductive coating.

When the flexible coating composition was ready to be used, the first part of the composition was refreshed by brief mixing. The epoxy hardener was added to the first part of the composition. The two parts were mixed on the FlackTek Speed mixer for 2 minutes at 1800 rpm to form the flexible coating composition. The flexible coating composition was then applied to the HST.

In one embodiment, 56.0 to 60.0 wt. % of silver coated copper flakes, 3.0 to 3.9 wt. % of benzyl alcohol, 26.6 to 33.3 wt. % of ethanol, 0.3 to about 0.4 wt. % of hydroxypropyl cellulose, 0.5 to about 4.4 wt. % of epoxy resin and 1.3-8.7 wt.% of epoxy hardener as well as 0.6-0.8 wt.% dispersant were combined to form the coating. The coating was then applied to a heat shrink tube by spraying. The dried film from the coating had the silver coated copper flakes in the range of about 80-95 wt. % while the binder, hydroxypropyl cellulose and dispersant were in the range of about 5-20 wt. %.

In another embodiment, the binder for the conductive coating was styrene butadiene rubber (SBR) dispersion, Lib-SBR. The SBR dispersion, which was in the range of about 11.7 to about 1.7 wt. % was mixed with about 57.1 to about 60.0 wt. % of silver coated copper flakes in about 15.1 to 18.6 wt. % of water and 15.1 to 18.6 wt. % of ethanol. About 0.31 to about 0.38 wt. % of hydroxypropyl cellulose and about 0.62 to about 0.77 wt.% of dispersant were added to form the conductive coating. The coating is dried with forced air convection oven at 50° C for 30 minutes. After the coating dried on the heat shrink tubing, the silver coated copper flakes formed about 89-97 wt. % of the coating with the resin, adhesion promoter, hydroxypropyl cellulose and dispersant in the range of about 11-3 wt. %.

In yet another embodiment, the binder in the conductive coating composition was a water-based thermoplastic polyurethane (TPU) dispersion, i.e., Behr, B8102. In this embodiment, silver coated copper flakes in the range of about 53.1 to about 58.7 wt. % of the composition were added to about 2.6 to about 17.0 wt. % of TPU dispersion, 0.58 to about 0.75 wt. % of dispersant, 0.8 to 1.1 wt. % of adhesion promoter, and 0.29 to about 0.38 wt. % of a rheology control agent, in about 15.5 to about 16.7 wt. % water and 15.5 to about 16.7 wt. % ethanol to form the conductive coating. The coating was sprayed onto a heat shrink tube. Once dried, the coating had 89-95 wt. % of silver coated copper flakes, with 11-5 wt. % comprising the binder, adhesion promoter, rheology control agent and dispersant.

In yet another embodiment, the binder in the conductive coating composition was thermoplastic polyurethane (TPU) dispersion, i.e., Alberdingk U 4000 or Alberdingk U 4040. In this embodiment, silver coated copper flakes in the range of about 57.9 to about 65.3 wt. % of the composition were added to about 3.6 to about 19.3 wt. % of TPU dispersion, 9.5 to about 12.6 wt. % of water, 0.17 to about 1.02 wt. % of dispersant, 0.55 to about 0.72 wt. % of hydroxypropyl cellulose and about 12.6 to about 16.7 wt. % ethanol to form the conductive coating. The coating was sprayed onto a heat shrink tube. Once dried, the coating had 90-96 wt. % of silver coated copper flakes, with 10-4 wt. % comprising the binder, rheology control agent and dispersant.

In still yet another embodiment, the binder in the conductive coating composition was a blend of a thermoplastic polyurethane (TPU) dispersion, i.e., Alberdingk U 4000, and a polyacrylate dispersion, i.e., Rovene 6120 or Alberdingk AC 2389. In this embodiment, silver coated copper flakes in the range of about 59.9 to about 63.8 wt. % of the composition were added to about 3.9 to about 9.2 wt. % of TPU dispersion, 2.5 to 6.9 wt. % polyacrylate dispersion, 9.9 to about 12.3 wt. % water, 0.4 to about 0.54 wt. % of dispersant, 0.57 to about 0.71 wt. % hydroxypropyl cellulose and 13.1 to about 16.3 wt. % ethanol to form the conductive coating. The coating was sprayed onto a heat shrink tube. Once dried, the coating had 89-95 wt. % of silver coated copper flakes, with 11-5 wt. % comprising the binder, rheology control agent and dispersant.

While the invention has been described with reference to a preferred embodiment, it will be understood by those skilled in the art that various changes may be made and equivalents may be substituted for elements thereof without departing from the spirit and scope of the invention as defined in the accompanying claims. One skilled in the art will appreciate that the invention may be used with many modifications of structure, arrangement, proportions, sizes, materials and components and otherwise used in the practice of the invention, which are particularly adapted to specific environments and operative requirements without departing from the principles of the present invention. The presently disclosed embodiments are therefore to be considered in all respects as illustrative and not restrictive, the scope of the invention being defined by the appended claims, and not limited to the foregoing description or embodiments.

## Claims

1. A flexible conductive coating for use in heat shrink tubing comprising a conductive filler, a solvent, and a binder.

2. The flexible conductive coating of claim 1, wherein said coating further comprises a dispersant.

3. The flexible conductive coating of claim 1 or 2, wherein said binder is (a) an epoxy resin and an epoxy hardener, (b) a styrene-butadiene rubber dispersion, (c) a thermoplastic polyurethane dispersion, or (d) a blend of a thermoplastic polyurethane dispersion and a polyacrylate dispersion.

4. The flexible conductive coating of claim 1, 2 or 3, wherein said solvent comprises (a) benzyl alcohol, (b) water and ethanol, or (c) benzyl alcohol and ethanol.

5. The flexible conductive coating of any preceding claim, wherein said conductive filler comprises silver coated copper flakes.

6. The flexible conductive coating of any preceding claim, wherein said conductive coating further comprises (a) hydroxypropyl cellulose, (b) an adhesion promoter, or (c) a rheology control agent.

7. The flexible conductive coating of any preceding claim, wherein said conductive coating has a volume resistivity in the range of about 1 x 10⁻⁶ to about 1 x 10⁻⁷ Ohm-m as measured by IEC 600093.

8. The flexible conductive coating of any one of claims 1 to 6, wherein said conductive coating has a volume resistivity of less than 1 x 10⁻⁵ Ohm-m as measured by IEC 600093.

9. The flexible conductive coating of any preceding claim, wherein said binder is an epoxy resin and epoxy hardener, said solvent is benzyl alcohol and ethanol, and said conductive filler is silver coated copper flakes.

10. The flexible conductive coating of any one of claims 1 to 8, wherein said binder is a styrene butadiene rubber dispersion, said solvent is water and ethanol, and said conductive filler is silver coated copper flakes.

11. The flexible conductive coating of claim 9, wherein said coating further comprises (a) an adhesion promoter, or (b) hydroxypropyl cellulose.

12. The flexible conductive coating of any one of claims 1 to 8, wherein said binder is a thermoplastic polyurethane dispersion, said solvent is water and ethanol, and said conductive filler is silver coated copper flakes.

13. The flexible conductive coating of any preceding claim, wherein said binder has a Shore A hardness in the range of about 30 to about 80.

14. The flexible conductive coating of any preceding claim, wherein said binder has an elongation (%) from about 800 to 6 as measured by ASTM D638-14.

15. A process for forming a flexible conductive coating comprising mixing a dispersant and a solvent to form a first mixture; adding an epoxy resin to the first mixture to form a second mixture and further mixing said second mixture; adding a conductive filler to said second mixture to form a third mixture; adding an epoxy hardener to said third mixture to form the flexible conductive coating and applying spraying said flexible conductive coating onto a heat shrink tube.
